# EUROPÄISCHE PATENTSCHRIFT

(11) **EP 1 612 078 B1**
(45) Veröffentlichungstag und Bekanntmachung des Hinweises auf die Patenterteilung: **24.09.2008**
(21) Anmeldenummer: 05012941.0
(22) Anmeldetag: 16.06.2005
(51) Int. Cl.: B60J 7/22

(54) **Windstopeinrichtung**
Wind deflector device
Arrangement déflecteur de vent

(30) Priorität: 29.06.2004 DE 102004032379
(43) Veröffentlichungstag der Anmeldung: 04.01.2006
(73) Patentinhaber: SCAMBIA INDUSTRIAL DEVELOPMENTS AKTIENGESELLSCHAFT, 9494 Schaan (LI)
(72) Erfinder: Mayer, Günther, 74357 Bönnigheim (DE); Eisenschmidt, Jens, 75181 Pforzheim (DE); Riehle, Jörg, 71679 Asperg (DE); Neumann, Peter, 71720 Oberstenfeld (DE); Gassebner, Martin, 70806 Kornwestheim (DE)
(74) Vertreter: Hoeger, Stellrecht & Partner Patentanwälte

(56) Entgegenhaltungen:
- DE-A1- 10 102 662
- DE-A1- 19 616 448
- US-A- 5 318 337

## Beschreibung

Die Erfindung betrifft eine Windstopeinrichtung, insbesondere für Cabriofahrzeuge, umfassend ein Windschott und eine mit dem Windschott verbundene Abdeckung für einen Teilbereich einer Fahrgastraumöffnung einer Karosserie, wobei das Windschott und die Abdeckung relativ zueinander um eine Schwenkachse verschwenkbar sind.

Derartige Windstopeinrichtungen sind beispielsweise aus der DE 195 45 405 A1 oder aus der DE 100 53 701 A1 bekannt.

Bei diesen besteht das Problem, daß bei der den Teilbereich der Fahrgastraumöffnung verschließender Abdeckung der unter diesem Teilbereich liegende Teil des Fahrgastraums schwer zugänglich ist.

Der Erfindung liegt daher die Aufgabe zugrunde, eine Windstopeinrichtung der gattungsgemäßen Art derart zu verbessern, daß der von der Abdeckung überdeckte Bereich des Fahrgastraums möglichst leicht zugänglich ist.

Diese Aufgabe wird bei einer Windstopeinrichtung der eingangs beschriebenen Art erfindungsgemäß dadurch gelöst, daß die Abdeckung mindestens einen an der Karosserie anliegenden und an dieser fixierbaren Abdeckungsrahmen mit einer Öffnung aufweist und daß die Öffnung durch ein an dem Abdeckungsrahmen gelagertes und gegenüber diesem bewegbares Verschlußelement verschließbar ist.

Der Vorteil der erfindungsgemäßen Lösung ist darin zu sehen, daß durch dieses Verschlußelement ein einfacher Zugang durch den Abdeckungsrahmen hindurch zu dem unter dem vom Abdeckungsrahmen überdeckten Teilbereich der Fahrgastraumöffnung liegenden Teil des Fahrgastraums möglich ist.

Prinzipiell könnte das Verschlußelement beispielsweise als ausziehbares Rollo ausgebildet sein. Besonders günstig ist es jedoch, wenn das Verschlußelement als ein in sich steifes Teil ausgebildet ist.

Ferner ist vorteilhafterweise vorgesehen, daß das Verschlußelement zwar luftdurchlässig, jedoch einen Luftstrom unterbindend ausgebildet ist, so daß die Abdeckung optimal mit dem Windschott hinsichtlich der Luftdurchlässigkeit zusammenwirken kann, um einen Luftaustausch, jedoch keinen Luftstrom zuzulassen.

Das Verschlußelement könnte beispielsweise als in sich steife Platte ausgeführt sein.

Eine besonders einfache Ausgestaltung sieht jedoch vor, daß das Verschlußelement einen Rahmen aufweist, dessen Rahmenöffnung durch eine Rahmenfüllung verschlossen ist.

Mit einem derartigen Rahmen läßt sich konstruktiv in besonders einfacher Weise eine Adaption an den Abdeckungsrahmen realisieren.

Vorzugsweise ist dabei die Rahmenfüllung als in den Rahmen eingespanntes Flachmaterial ausgebildet, das jedoch ebenfalls nach wie vor eine Platte sein könnte.

Zweckmäßigerweise ist dabei die Rahmenfüllung aus einem luftdurchlässigen Flachmaterial hergestellt.

Eine besonders zweckmäßige Lösung, die insbesondere an die Ausführung des Windschotts angepaßt ist, sieht vor, daß die Rahmenfüllung ein biegeschlaffes Flachmaterial ist.

Das Verschlußelement könnte in unterschiedlichster Weise an dem Abdeckungsrahmen gelagert und gegenüber diesem bewegbar sein.

So sieht eine besonders günstige Ausführungsform vor, daß das Verschlußelement gelenkig mit diesem verbunden ist, so daß eine Schwenkbewegung um die gelenkige Verbindung des Verschlußelements relativ zum Abdeckungsrahmen erfolgen kann.

Beispielsweise läßt sich dies dadurch realisieren, daß das Verschlußelement mit seiner dem Windschott zugewandten Seite gelenkig mit dem Abdeckungsrahmen verbunden ist.

Eine andere Ausgestaltung sieht vor, daß das Verschlußelement mit einer quer zu dem Windschott verlaufenden Seite gelenkig mit dem Abdeckungsrahmen verbunden ist. Diese quer zu dem Windschott verlaufende Seite ist beispielsweise eine einer Trennebene der Abdeckung zugewandten Seite.

Hinsichtlich der Fixierung der gesamten Windstopeinrichtung wurden bislang keine näheren Angaben gemacht. So sieht ein vorteilhaftes Ausführungsbeispiel vor, daß die Abdeckung durch Fixiereinrichtungen mit der Karosserie verbindbar ist.

Besonders günstig ist es dabei, wenn eine hintere Fixiereinrichtung im Bereich zwischen hinteren Kopfstützen an der Karosserie angeordnet ist.

Beispielsweise läßt sich in diesem Fall die Fixiereinrichtung im Bereich einer hinteren Rücksitzanlage anordnen.

Dabei könnte die Fixiereinrichtung beispielsweise in die Rücksitzlehne der Rücksitzanlage integriert sein.

Eine besonders vorteilhafte Anordnung sieht vor, daß die hintere Fixiereinrichtung auf einer Oberseite der Karosserie angeordnet ist, wobei in diesem Fall beispielsweise die Fixiereinrichtung auf einer Oberseite einer Rücksitzlehne angeordnet sein kann.

Hinsichtlich der Ausführung des Windschotts und der Abdeckung wurden bislang keine näheren Angaben gemacht.

Aus Gründen einer leichten Verstaubarkeit hat es sich als besonders vorteilhaft erwiesen, wenn das Windschott aus zwei Windschottteilen gebildet ist, die ihrerseits um eine Schwenkachse von einer ausgebreiteten Stellung, in welcher sich das Windschott mit maximaler Ausdehnung in einer Ausbreitungsrichtung, vorzugsweise im an der Karosserie montierten Zustand quer zur Fahrtrichtung, erstreckt, in eine zusammengeklappte Stellung bringbar sind, in welcher die beiden Windschottteile im wesentlichen aufeinanderliegen und daß auch die Abdeckung durch zwei Abdeckungsteile gebildet ist.

Beim Vorsehen zweier Abdeckungsteile ist zweckmäßigerweise vorgesehen, daß der Abdeckungsrahmen in mindestens einem der Abdeckungsteile vorgesehen ist.

Vorzugsweise ist jedoch vorgesehen, daß der Abdeckungsrahmen in beiden Abdeckungsteilen ausgebildet ist.

Weitere Merkmale und Vorteile der erfindungsgemäßen Lösung sind Gegenstand der nachfolgenden Beschreibung sowie der zeichnerischen Darstellung einiger Ausführungsbeispiele.

In den Figuren zeigen:
- Fig. 1: eine perspektivische Darstellung einer an einer Karosserie eines Cabriofahrzeugs montierten Windstopeinrichtung gemäß einem ersten Ausführungsbeispiel mit Blick von einer Vorderseite der Karosserie in Richtung einer Rückseite;
- Fig. 2: eine perspektivische Darstellung der Windstopeinrichtung gemäß dem ersten Ausführungsbeispiel mit Blick von einer Rückseite der Karosserie schräg in Richtung einer Vorderseite und
- Fig. 3: eine Darstellung ähnlich Fig. 2 einer Windstopeinrichtung gemäß einem zweiten Ausführungsbeispiel.

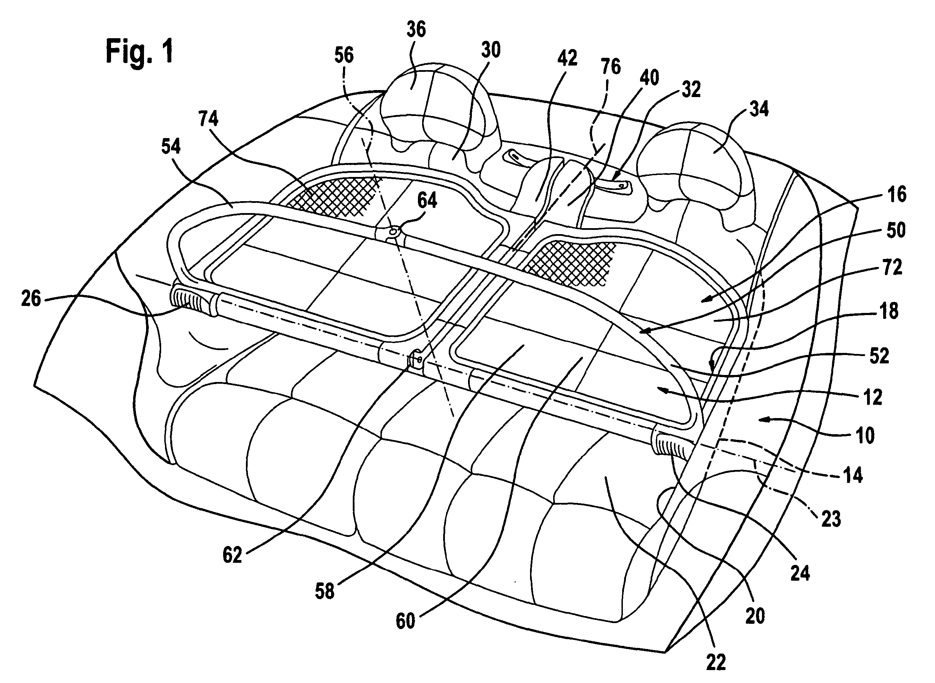

Ein Ausführungsbeispiel einer erfindungsgemäßen Windstopeinrichtung für ein Kraftfahrzeug, insbesondere ein Cabriofahrzeug, dessen Karosserie 10 in Fig. 1 ausschnittsweise dargestellt ist, umfaßt ein Windschott 12, welches über eine Gürtellinie 14 der Karosserie 10 des Kraftfahrzeugs nach oben übersteht, sowie eine Abdeckung 16, welche einen hinter dem Windschott 12 liegenden Teilbereich 18 einer ungefähr in Höhe der Gürtellinie 14 liegenden Fahrgastraumöffnung 20 abdeckt. Beispielsweise liegt der Teilbereich 18 der Fahrgastraumöffnung 20 über Rücksitzen 22 des Kraftfahrzeugs, wobei das Windschott 12 im wesentlichen unmittelbar hinter zeichnerisch in Fig. 1 nicht dargestellten Kopfstützen von Vordersitzen des Kraftfahrzeugs angeordnet ist.

Die Abdeckung 16 ist mit dem Windschott 12 vorzugsweise gelenkig, beispielsweise um eine Klappachse 23 verschwenkbar, verbunden und beide gemeinsam sind über Fixiereinrichtungen 24, 26, die entweder am Windschott 12 oder an der Abdeckung 16 angeordnet sind, im Bereich der Gürtellinie 14 an der Karosserie 10 fixierbar, wobei die Fixiereinrichtungen 24, 26 beispielsweise ausfahrbare Haltezapfen 28 umfassen, die mit entsprechenden Ausnehmungen im Bereich der Karosserie 10 in Eingriff bringbar sind.

Zusätzlich ist die Abdeckung 16 noch im Bereich einer Rücksitzlehne 30 in einer hinteren Fixiereinrichtung 32 fixierbar, die beispielsweise auf der Rücksitzlehne 30 zwischen hinteren Kopfstützen 34, 36 angeordnet ist und in welcher an der Abdeckung 16 angeformte Fixiervorsprünge 40, 42 lösbar festlegbar sind, wobei die Fixiervorsprünge beispielsweise Zapfen 44 aufweisen, welche in die hintere Fixiereinrichtung 32 eintauchen und in dieser vorzugsweise formschlüssig verankerbar sind.

Das Windschott 12 ist gebildet durch einen Windschottrahmen 50, welcher zwei Rahmenteile 52 und 54 aufweist, die um eine Schwenkachse 56, welche beispielsweise eine Mittelachse darstellt, relativ zueinander verschwenkbar sind und somit von einer aufgeklappten Funktionsstellung in welcher sich der Windschottrahmen 50 mit maximaler Ausdehnung in Richtung seiner Rahmenfläche erstreckt, in eine Klappstellung bringbar sind, in welcher die Rahmenteile 52, 54 ungefähr aufeinanderliegen.

Die beiden Rahmenteile 52 und 54 bilden insgesamt eine Rahmenöffnung 58, welche durch eine Flachmaterialbahn 60 verschlossen ist, die bei aufgeklappten und somit in Funktionsstellung stehenden Rahmenteilen 52, 54 in dem Windschottrahmen 50 gespannt gehalten ist.

Bei der Flachmaterialbahn 60 handelt es sich beispielsweise um eine solche aus einem biegeschlaffen, luftdurchlässigen, jedoch eine Luftströmung blockierenden Material.

Vorzugsweise sind die Rahmenteile 52, 54 so ausgebildet, daß diese über Scharniere 62, 64 miteinander verbunden sind und sich jeweils C-förmig beiderseits der Schwenkachse 56 erstrecken, so daß die Rahmenöffnung 58 sich über den ganzen Windschottrahmen 50 erstreckt und im Bereich der Schwenkachse nicht durch Streben geteilt ist.

Die Abdeckung 16 ist ebenfalls gebildet aus zwei Abdeckungsteilen 72 und 74, die im Bereich einer Trennebene 76, in welcher auch die Schwenkachse 56 liegt, voneinander getrennt sind.

Ferner sind entweder beide Abdeckungsteile 72 und 74 oder nur eines derselben gelenkig mit dem Windschott 12 verbunden, um die gesamte Windstopeinrichtung zusammenfalten zu können. Diese gelenkige Verbindung kann beispielsweise über eine Schwenkachse 78 erfolgen, die im einfachsten Fall mit der Klappachse 23 identisch ist oder zumindest parallel zu dieser verläuft.

Bei einer Variante erfolgt eine Faltung gemäß der DE 195 45 405, auf welche diesbezüglich vollinhaltlich Bezug genommen wird. Bei dieser Art der Faltung sind beide Abdeckungsteile 72 und 74 gelenkig mit dem Windschott 12, und zwar jeweils mit einem der Rahmenteile 52, 54, verbunden, so daß beim Falten derselben ein Schwenken um die Schwenkachse 56 und Zusammenklappen der Rahmenteile 52 und 54 sowie der Abdeckungsteile 72 und 74 erfolgt, derart, daß die Rahmenteile 52, 54 aufeinander und zwischen den Abdeckungsteilen 72, 74 liegen.

Eine andere Lösung sieht ein Zusammenklappen gemäß der DE 100 53 701 A1 vor, wobei bei dieser Lösung die Abdeckungsteile 72 und 74 gelenkig miteinander verbunden sind, jedoch nur eines der Abdeckungsteile 72 und 74 ständig mit einem der Rahmenteile 52 bzw.54 gelenkig verbunden ist, so daß jeweils die Abdeckungsteile 72 und 74 und die Rahmenteile 52 und 54 relativ zueinander zusammengeklappt werden und dann insgesamt die zusammengeklappten Rahmenteile 52, 54 sowie die zusammengeklappten Abdeckungsteile 72, 74 durch Schwenken um die Schwenkachse 78 zwischen einem der Abdeckungsteile 72, 74 und einem der Rahmenteile 52, 54 aufeinandergelegt werden können.

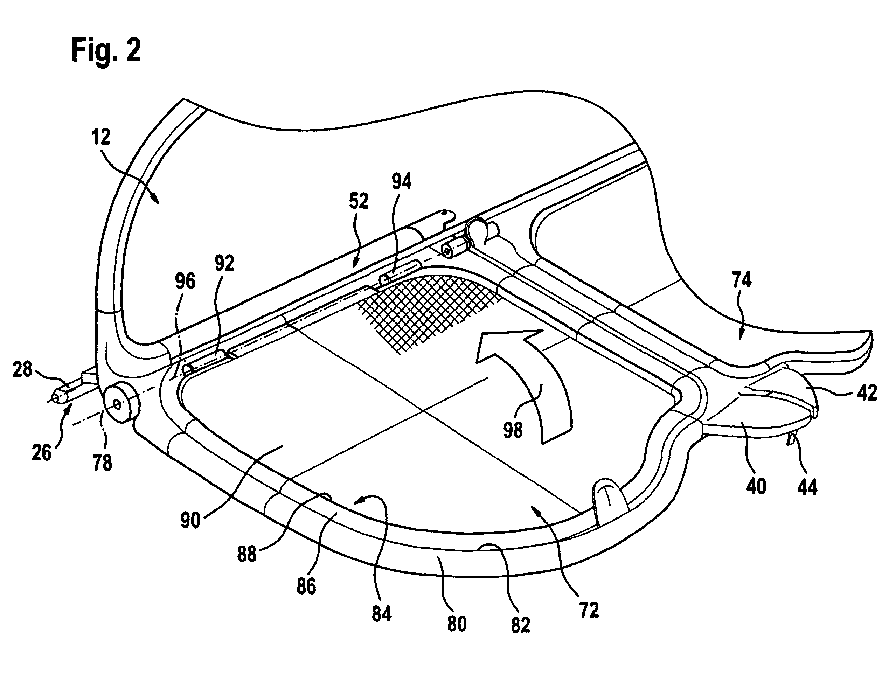

Wie in Fig. 2 am Beispiel des Abdeckungsteils 72 dargestellt, umfaßt jedes der Abdeckungsteile 72, 74 einen Abdeckungsrahmen 80, der an der Karosserie 10 fixierbar ist, und zwar einerseits durch eine Verbindung mit dem Windschott 12 und/oder der jeweiligen Fixiereinrichtung 24, 26 und der hinteren Fixiereinrichtung 32 über die Fixiervorsprünge 40 bzw. 42.

Der Abdeckungsrahmen 80 umschließt eine Öffnung 82, welche durch ein als Ganzes mit 84 bezeichnetes Verschlußelement verschließbar ist, wobei dieses Verschlußelement 84 vorzugsweise gelenkig mit dem Abdeckungsrahmen 80 verbunden ist.

Bei einem ersten Ausführungsbeispiel der erfindungsgemäßen Windstopeinrichtung ist das Verschlußelement 84 so ausgebildet, daß dieses einen Rahmen 86 aufweist, der dem Verschlußelement die nötige Steifigkeit verleiht, wobei dieser Rahmen 86 gelenkig mit dem Abdeckungsrahmen 80 verbunden ist.

Dieser Rahmen 86 weist seinerseits ebenfalls eine Rahmenöffnung 88 auf, die vorzugsweise durch eine Flachmaterialbahn 90 verschlossen ist, wobei diese Flachmaterialbahn 90 beispielsweise aus einem biegeschlaffen Material gebildet ist, das in den Rahmen 86 eingespannt ist, wobei dieses biegeschlaffe Flachmaterial im einfachsten Fall identisch ist mit dem Flachmaterial 60 des Windschotts 12 und somit luftdurchlässig ist, jedoch die Ausbildung eines Luftstroms blockiert.

Bei dem ersten Ausführungsbeispiel ist der Rahmen 86 über zwei Scharniere 92 und 94 an dem Abdeckungsrahmen 80 um eine Schwenkachse 96 schwenkbar gelagert, wobei die Schwenkachse 96 auf der Seite des Rahmenteils 52 des Windschotts 12 und ebenfalls ungefähr parallel zu der Schwenkachse 78 verläuft, um welche das Windschott 12 relativ zur Abdeckung 16 verschwenkbar ist, um die Rahmenteile 52, 54 sowie die Abdeckungsteile 72, 74 aufeinanderlegen zu können.

Somit ist das Verschlußelement 84 in Richtung des Pfeils 98 zum Windschott 12 hin hochklappbar, um einen günstigen Zugang zu dem Raum über den Rücksitzen 22 zu schaffen.

Vorzugsweise ist ferner der Rahmen 86 so ausgebildet, daß er innerhalb des Abdeckungsrahmens 80 und somit in der Öffnung 82 desselben liegt, so daß die Höhe der Abdeckung 16, mit welcher diese sich über den Teilbereich 18 der Fahrgastraumöffnung 20 erhebt, primär durch den Abdeckungsrahmen 80 vorgegeben ist und der zusätzliche Rahmen 86 keinen Beitrag hierzu leistet.
Durch die Verschwenkbarkeit des Verschlußelements 84 zum Abdeckungsrahmen 80 um die Schwenkachse 96 besteht die Möglichkeit, daß ein Nutzer des mit einer erfindungsgemäßen Windstopeinrichtung versehenen Kraftfahrzeugs die Möglichkeit hat, Zugang zu dem über den Rücksitzen 22 liegenden Bereich des Fahrgastraums zu haben, und dort Gegenstände zu deponieren oder Gegenstände zu entnehmen, ohne daß die Fixierung der gesamten Windstopeinrichtung an der Karosserie 10 gelöst werden muß, da die Fixierung im Bereich der Abdeckungsteile 72 und 74 jeweils über den vorgesehenen Abdeckungsrahmen 80 erfolgt, die beim Bewegen des Verschlußelements 84 relativ zu diesem nicht tangiert wird.

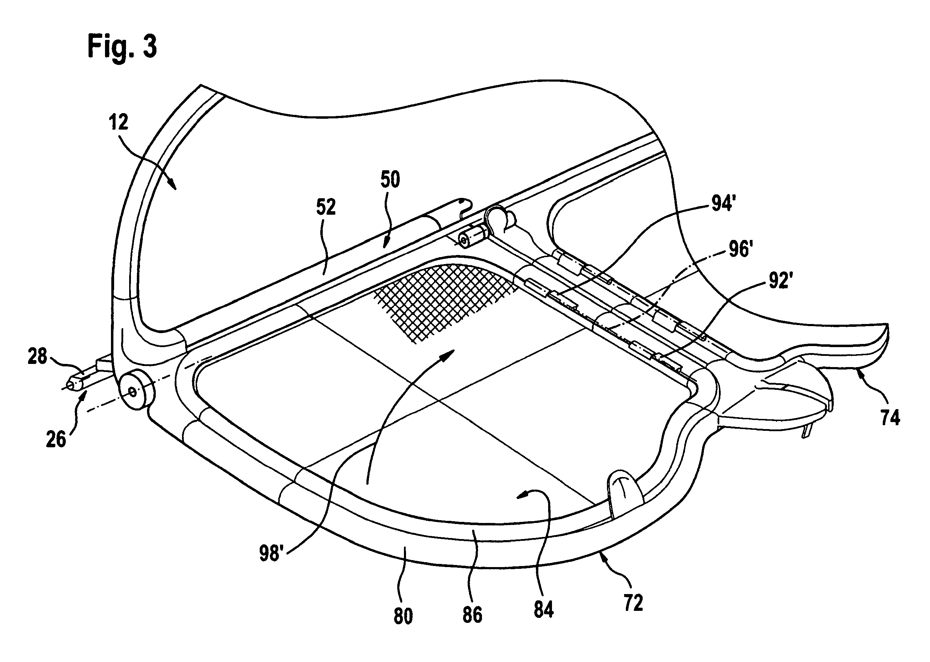

Bei einem zweiten Ausführungsbeispiel einer erfindungsgemäßen Windschotteinrichtung, dargestellt in Fig. 3, sind die Abdeckungsteile 72 und 74 in gleicher Weise wie beim ersten Ausführungsbeispiel ausgebildet, allerdings mit dem Unterschied, daß das Verschlußelement 84 mittels Scharnieren 92', 94' an dem Abdeckungsrahmen 80 gehalten ist, die auf einer der Trennebene 76 zugewandten Seite des Abdeckungsrahmens 80 liegen, welche dem Abdeckungsrahmen 80 des anderen Abdeckungsteils 74, 72 zugewandt ist, so daß die Schwenkachse 96' quer zum Windschott 12, insbesondere quer zum Windschottrahmen 50 und somit quer zu der Schwenkachse 78 verläuft, um welche die Rahmenteile 52, 54 relativ zu den Abdeckungsteilen 72, 74 verschwenkbar sind, um diese aufeinander zu falten.

Damit ist das Verschlußelement 84 in einer Richtung 98' aus dem Abdeckungsrahmen 80 hochklappbar, so daß von der Seite der Karosserie ein guter Zugriff auf den Raum über den Rücksitzen 22 möglich ist.

Im übrigen ist das zweite Ausführungsbeispiel in gleicher Weise ausgebildet wie das erste Ausführungsbeispiel, so daß auf die Ausführungen zu diesem vollinhaltlich Bezug genommen wird.

## Patentansprüche

1. Windstopeinrichtung insbesondere für Cabriofahrzeuge, umfassend ein Windschott (12) und eine mit dem Windschott (12) verbundene Abdeckung (16) für einen Teilbereich (18) einer Fahrgastraumöffnung (20) einer Karosserie (10), wobei das Windschott (12) und die Abdeckung (16) relativ zueinander um eine Schwenkachse (78) verschwenkbar sind,
**dadurch gekennzeichnet, daß** die Abdeckung (16) mindestens einen an der Karosserie (10) anliegenden und an dieser fixierbaren Abdeckungsrahmen (80) mit einer Öffnung (82) aufweist und daß die Öffnung (82) durch ein an dem Abdeckungsrahmen (80) gelagertes und gegenüber diesem bewegbares Verschlußelement (84) verschließbar ist.

2. Windstopeinrichtung nach Anspruch 1, **dadurch gekennzeichnet, daß** das Verschlußelement (84) als ein in sich steifes Teil ausgebildet ist.

3. Windstopeinrichtung nach Anspruch 1 oder 2, **dadurch gekennzeichnet, daß** das Verschlußelement (84) luftdurchlässig, jedoch einen Luftstrom unterbindend ausgebildet ist.

4. Windstopeinrichtung nach einem der voranstehenden Ansprüche,
**dadurch gekennzeichnet, daß** das Verschlußelement (84) einen Rahmen (86) aufweist, dessen Rahmenöffnung (88) durch eine Rahmenfüllung (90) verschlossen ist.

5. Windstopeinrichtung nach Anspruch 4, **dadurch gekennzeichnet, daß** die Rahmenfüllung (90) als in den Rahmen (86) eingespanntes Flachmaterial ausgebildet ist.

6. Windstopeinrichtung nach Anspruch 4 oder 5, **dadurch gekennzeichnet, daß** die Rahmenfüllung (90) aus einem luftdurchlässigen Material ist.

7. Windstopeinrichtung nach einem der Ansprüche 4 bis 6, **dadurch gekennzeichnet, daß** die Rahmenfüllung (90) aus einem biegeschlaffen Flachmaterial ist.

8. Windstopeinrichtung nach einem der Ansprüche 4 bis 7, **dadurch gekennzeichnet, daß** das Verschlußelement (84) auf einer Seite des Abdeckungsrahmens (80) gelenkig mit diesen verbunden ist.

9. Windstopeinrichtung nach Anspruch 8, **dadurch gekennzeichnet, daß** das Verschlußelement (84) mit seiner dem Windschott (12) zugewandten Seite gelenkig mit dem Abdeckungsrahmen (80) verbunden ist.

10. Windstopeinrichtung nach Anspruch 8, **dadurch gekennzeichnet, daß** das Verschlußelement (84) mit einer quer zu dem Windschott (12) verlaufenden Seite gelenkig mit dem Abdeckungsrahmen (80) verbunden ist.

11. Windstopeinrichtung nach einem der voranstehenden Ansprüche,
**dadurch gekennzeichnet, daß** die Abdeckung (16) mit Fixiereinrichtungen (24, 26, 32) mit der Karosserie (10) verbindbar ist.

12. Windstopeinrichtung nach Anspruch 11, **dadurch gekennzeichnet, daß** eine hintere Fixiereinrichtung (32) im Bereich zwischen hinteren Kopfstützen (34, 36) an der Karosserie (10) angeordnet ist.

13. Windstopeinrichtung nach Anspruch 11 oder 12, **dadurch gekennzeichnet, daß** die hintere Fixiereinrichtung (32) im Bereich einer hinteren Rücksitzanlage angeordnet ist.

14. Windstopeinrichtung nach einem der Ansprüche 11 bis 13, **dadurch gekennzeichnet, daß** die hintere Fixiereinrichtung (32) auf einer Oberseite der Karosserie (10) angeordnet ist.

15. Windstopeinrichtung nach einem der voranstehenden Ansprüche,
**dadurch gekennzeichnet, daß** das Windschott (12) aus zwei Windschottteilen (52, 54) gebildet ist, die ihrerseits um eine Schwenkachse (56) von einer ausgebreiteten Stellung, in welcher sich das Windschott (12) mit maximaler Ausdehnung in einer Ausbreitungsrichtung erstreckt, in eine zusammengeklappte Stellung bringbar ist, in welcher die beiden Windschottteile (52, 54) im wesentlichen aufeinanderliegen, und daß die Abdeckung (16) durch zwei Abdeckungsteile (72, 74) gebildet ist.

16. Windstopeinrichtung nach Anspruch 15, **dadurch gekennzeichnet, daß** der Abdeckungsrahmen (80) in mindestens einem der Abdeckungsteile (72, 74) ausgebildet ist.

17. Windstopeinrichtung nach Anspruch 16, **dadurch gekennzeichnet, daß** der Abdeckungsrahmen (80) in beiden Abdeckungsteilen (72, 74) ausgebildet ist.

## Claims

1. Wind blocking device in particular for cabriolet vehicles, comprising a wind bulkhead (12) and a cover (16) connected to the wind bulkhead (12) for a subregion (18) of a passenger compartment opening (20) of a vehicle body (10), wherein the wind bulkhead (12) and the cover (16) are pivotable relative to one another about a pivotal axis (78),
**characterized in that** the cover (16) comprises at least one cover frame (80), which abuts against and is fixable to the vehicle body (10) and has an opening (82), and that the opening (82) is closable by means of a closure element (84) that is mounted on and movable relative to the cover frame (80).

2. Wind blocking device according to claim 1,
**characterized in that** the closure element (84) takes the form of an inherently rigid part.

3. Wind blocking device according to claim 1 or 2,
**characterized in that** the closure element (84) is designed to be air-permeable yet preventing an air flow.

4. Wind blocking device according to one of the preceding claims, **characterized in that** the closure element (84) comprises a frame (86), the frame opening (88) of which is closed by means of a frame panel (90).

5. Wind blocking device according to claim 4,
**characterized in that** the frame panel (90) takes the form of a flat material inserted into the frame (86).

6. Wind blocking device according to claim 4 or 5,
**characterized in that** the frame panel (90) is made from an air-permeable material.

7. Wind blocking device according to one of claims 4 to 6,
**characterized in that** the frame panel (90) is made from a flexurally slack flat material.

8. Wind blocking device according to one of claims 4 to 7,
**characterized in that** the closure element (84) is hinge-connected to the cover frame (80) at one side thereof.

9. Wind blocking device according to claim 8,
**characterized in that** the closure element (84) is hinge-connected to the cover frame (80)by its side facing the wind bulkhead (12).

10. Wind blocking device according to claim 8,
**characterized in that** the closure element (84) is hinge-connected to the cover frame (80) by a side running transversely of the wind bulkhead (12).

11. Wind blocking device according to one of the preceding claims, **characterized in that** the cover (16) is connectable by fixing devices (24, 26, 32) to the vehicle body (10).

12. Wind blocking device according to claim 11,
**characterized in that** a rear fixing device (32) is disposed on the vehicle body (10) in the region between rear head restraints (34, 36).

13. Wind blocking device according to claim 11 or 12,
**characterized in that** the rear fixing device (32) is disposed in the region of a rear backseat structure.

14. Wind blocking device according to one of claims 11 to 13, **characterized in that** the rear fixing device (32) is disposed on an upper side of the vehicle body (10).

15. Wind blocking device according to one of the preceding claims, **characterized in that** the wind bulkhead (12) is formed from two wind bulkhead parts (52, 54), which are in turn movable about a pivotal axis (56) from a spread-out position, in which the wind bulkhead (12) extends to the maximum extent in a spread-out direction, into a collapsed position, in which the two wind bulkhead parts (52, 54) lie substantially one on top of the other, and that the cover (16) is formed by two cover parts (72, 74).

16. Wind blocking device according to claim 15,
**characterized in that** the cover frame (80) is formed in at least one of the cover parts (72, 74).

17. Wind blocking device according to claim 16,
**characterized in that** the cover frame (80) is formed in both cover parts (72, 74).

## Revendications

1. Dispositif déflecteur de vent en particulier par des véhicules décapotables, comprenant un pare-vent (12) et un recouvrement (16) relié au pare-vent (12) pour une zone partielle (18) d'une ouverture d'habitacle (20) d'une carrosserie (10), le pare-vent (12) et le recouvrement (16) pouvant pivoter l'un par rapport à l'autre autour d'un axe de pivotement (78), **caractérisé en ce que** le recouvrement (16) présente au moins un cadre de recouvrement (80) muni d'une ouverture (82), lequel est appliqué contre la carrosserie (10) et peut être fixé sur celle-ci, et **en ce que** l'ouverture (82) peut être fermée par un élément de fermeture (84) logé sur le cadre de recouvrement (80) et pouvant être déplacé par rapport à celui-ci.

2. Dispositif déflecteur de vent selon la revendication 1, **caractérisé en ce que** l'élément de fermeture (84) est conçu comme une pièce rigide en soi.

3. Dispositif déflecteur de vent selon la revendication 1 ou 2, **caractérisé en ce que** l'élément de fermeture (84) est perméable à l'air, mais est conçu de manière à empêcher un courant d'air.

4. Dispositif déflecteur de vent selon l'une quelconque des revendications précédentes, **caractérisé en ce que** l'élément de fermeture (84) comporte un cadre (86) dont l'ouverture de cadre (88) est fermée par un élément de remplissage de cadre (90).

5. Dispositif déflecteur de vent selon la revendication 4, **caractérisé en ce que** l'élément de remplissage de cadre (90) est conçu comme un matériau plat tendu sur le cadre (86).

6. Dispositif déflecteur de vent selon la revendication 4 ou 5, **caractérisé en ce que** l'élément de remplissage de cadre (90) se compose d'un matériau perméable à l'air.

7. Dispositif déflecteur de vent selon l'une quelconque des revendications 4 à 6, **caractérisé en ce que** l'élément de remplissage de cadre (90) est conçu dans un matériau souple en flexion.

8. Dispositif déflecteur de vent selon l'une quelconque des revendications 4 à 7, **caractérisé en ce que** l'élément de fermeture (84) sur un côté du cadre de recouvrement (80) est relié à celui-ci de manière articulée.

9. Dispositif déflecteur de vent selon la revendication 8, **caractérisé en ce que** l'élément de fermeture (84), avec son côté orienté vers le pare-vent (12), est relié de manière articulée au cadre de recouvrement (80).

10. Dispositif déflecteur de vent selon la revendication 8, **caractérisé en ce que** l'élément de fermeture (84), avec un côté s'étendant transversalement par rapport au coupe-vent (12), est relié de marnière articulée au cadre de recouvrement (80).

11. Dispositif déflecteur de vent selon l'une quelconque des revendications précédentes, **caractérise en ce que** le recouvrement (16) peut être relié à la carrosserie (10) à l'aide de dispositif de fixation (24, 26, 32).

12. Dispositif déflecteur de vent selon la revendication 11, **caractérisé en ce qu'**un dispositif de fixation arrière (32) est disposé sur la carrosserie (10) dans la zone située entre les appuie-tête arrière (34, 36).

13. Dispositif déflecteur de vent selon la revendication 11 ou 12, **caractérisé en ce que** le dispositif de fixation arrière (32) est disposé dans la zone d'un système de sièges arrière.

14. Dispositif déflecteur de vent selon l'une quelconque des revendications 11 à 13, **caractérisé en ce que** le dispositif de fixation arrière (32) est disposé sur une face supérieure de la carrosserie (10).

15. Dispositif déflecteur de vent selon l'une quelconque des revendications précédentes, **caractérisé en ce que** le pare-vent (12) se compose de deux parties de pare-vent (52, 54), qui de leur côté, autour d'un axe de pivotement (56), peuvent être amenées d'une position déployée, dans laquelle le pare-vent (12) s'étend avec une extension maximale dans une direction de déploiement, à une position repliée, dans laquelle les deux parties de pare-vent (52, 54) sont essentiellement posées l'une sur l'autre, et **en ce que** le recouvrement (16) se compose de deux parties de recouvrement (72, 74).

16. Dispositif déflecteur de vent selon la revendication 15, **caractérisé en ce que** le cadre de recouvrement (80) est réalisé dans au moins une des parties de recouvrement (72, 74).

17. Dispositif déflecteur de vent selon la revendication 16, **caractérisé en ce que** le cadre de recouvrement (80) est réalisé dans les deux parties de recouvrement (72, 74).
